# EUROPÄISCHE PATENTSCHRIFT

(11) **EP 2 365 294 B1**
(45) Veröffentlichungstag und Bekanntmachung des Hinweises auf die Patenterteilung: **26.04.2017**
(21) Anmeldenummer: 11161322.0
(22) Anmeldetag: 17.07.2008
(51) Int. Cl.: G01F 1/06, G01F 1/075

(54) **Strömungserfassungsgerät**
Flow recording device
Appareil de détermination de l'écoulement

(30) Priorität: 19.07.2007 DE 102007033792
(43) Veröffentlichungstag der Anmeldung: 14.09.2011
(62) Teilanmeldung aus: 08160576.8
(73) Patentinhaber: Gealan Formteile GmbH, 95145 Oberkotzau (DE)
(72) Erfinder: Braun, Thomas, 95234 Sparneck (DE); Christian, Saunus, 08223 Grünbach (DE)
(74) Vertreter: Fleuchaus, Michael A.

(56) Entgegenhaltungen:
- EP-A- 1 596 062
- EP-A- 1 693 651
- EP-A2- 1 773 092
- DE-A1- 3 104 134
- DE-A1- 10 038 598
- DE-A1-102005 027 888
- US-A- 4 440 030

## Beschreibung

Die vorliegende Erfindung betrifft ein Strömungserfassungsgerät zur Bestimmung von Strömungssignalen, die Verwendung solcher Strömungserfassungsgeräte in einem Leitungssystem und Verfahren zur Herstellung der Geräte.

Geräte zur Erfassung von Strömungssignalen sind im Stand derTechnik bekannt. So werden beispielsweise in bekannten medienführenden Anlagen zur Erfassung von Strömungssignalen, wie beispielsweise Durchflussmengen, Strömungserfassungsgeräte verwendet, welche als Funktions- oder Modulgruppen, wie sie in medienführenden Anlagen eingesetzt werden, gewisse Nachteile aufweisen. So sind die mediengeführten Anlagen und oder Systeme streng auf die standardisierten Bauräume und definierten Umgebungsbedingungen beschränkt und bietet nicht in allen Fällen die Möglichkeit des Zugangs und derfreien Austauschbarkeit. Darüber hinaus führt die eingeschränkte Servicefreundlichkeit selbst in bestimmten Anwendungen zum Komplettaustausch der Funktionsbaugruppen und die Servicetechniker haben im Anwendungsbereich / Servicefall nicht die Möglichkeit Systeme sinnvoll zu reinigen. Das bedeutet unter Umständen den Kompletttausch der Funktionsbaugruppen, obwohl ggf. lediglich ein untergeordnetes Bauteil tatsächlich defekt ist.

Solche Systeme sind beispielsweise Durchflussmesser, welche als Baugruppen eingesetzt werden.

Die EP 1 693 651 A2 betrifft einen Wassermengenmesser mit einem Flügelrad und einem Permanentmagneten, sowie einem Hallsensor, wobei der Permanentmagnet mit dem Flügelrad verbunden ist und der Hallsender durch eine Wand des Gehäuses vom Permanentmagneten getrennt ist.

Die EP 1 773 092 A2 betrifft ein Gehäuse mit Dichtungseinrichtung zur Verteilung und Führung von Schallwellen und zum Erschließen eines erweiterten Schallraumes, wobei die Dichtungseinrichtung die Anschlussstelle zwischen dem Gehäuse und dem erweiterten Schallraum, das Äußere des Gehäuses gegenüber dem Gehäuseinnenraum bzw. dem erweiterten Schallraum abdichtet.

Die US 4,440,30 betrifft einen Flüssigkeitsströmungsmesser mit einem drehbaren Flügelrad, gelagert in einer zylindrischen Kavität.

Die EP 1 596 062 A1 betrifft ein achsgelagertes Flügelrad, das in einem zylinderförmigen oder windkanalartigen Durchgang angeordnet ist, sowie das Verfahren zur Herstellung des achsgelagerten Flügelrades.

Die DE 3104134 A1 betrifft einen Durchflussmesser für Flüssigkeiten mit einem Flüssigkeitseinlass- und Flüssigkeitsauslasskanal der in Verbindung mit einer flachzylindrischen Messkammer aufweisend einen Messrotor mit Schaufeln zur Erzeugung digital erfassbarer Impulse.

Die DE 100 38 598 A1 betrifft einen Flüssigkeitszähler mit Trockenläuferausführung enthaltend ein Zählwerkgehäuse mit Trockenraum, eine Messkammer mit Flüssigkeitseinlauf und Flüssigkeitsablauf, sowie einen Schraubkopf, wodurch die Messkammer vom Trockenraum getrennt wird.

Die DE 10 2005 027 888 betrifft eine Durchflussmessvorrichtung zum Erfassen des Volumens einer durch eine Sanitärarmatur, einen Wasserhahn oder ein Auslassventil strömende Flüssigkeit. Die Messvorrichtung umfasst einen Durchflusskanal und einen durch die Flüssigkeit eintreibbaren Rotor der im Durchflusskanal drehbar gelagert angeordnet ist.

Aufgabe der vorliegenden Erfindung ist es, die im Stand der Technik bekannten Nachteile wenigstens teilweise zu vermeiden bzw. ein verbessertes System zur Verfügung zu stellen.

Erfindungsgemäß weist das Strömungserfassungsgerät zur Bestimmung von Strömungssignalen wenigstens ein Trägerelement mit einer Achse auf, wobei das Trägerelement und die Achse einteilig ausgeführt sind. Weiterhin weist das Strömungserfassungsgerät einen Propeller auf, wobei der Propeller auf der Achse drehbar angeordnet ist und die Achse an ihrem Ende eine umlaufende Nut aufweist. Weiterhin ist ein Sicherungselement vorhanden, welches ein Rastelement umfasst, dass in die Nut eingreift und einrastet. Dabei wird das Strömungserfassungsgerät dadurch gekennzeichnet, dass das Trägerelement als lösbares Verschlusselement ausgestaltet ist und dass das Verschlusselement als Verschlussdeckel ausgeführt ist und eine integrierte und/oder angespritzte Dichtung aufweist. Darüber hinaus ist die Rotationsachse des Erfassungselements beweglich, insbesondere drehbeweglich mit einem Sicherungselement fixiert.

Gemäß einer Ausführungsform ist das Trägerelement an die benachbarten Strukturen insbesondere in der Montageöffnung des medienführenden Systems angepasst. Dies bedeutet unter anderem, dass einerseits die medienführenden Leitungssysteme das Trägerelement aufnehmen können bzw. gemäß einer alternativen Ausführungsform insbesondere die Montageöffnung selbst derart gestaltet ist, dass Elemente, wie sie für die Funktion eines Verschlusses verwendet werden, in die benachbarten Strukturen des medienführenden Systems bzw. des hieran angrenzenden Gehäuses, in welchem das medienführende System aufgenommen ist, eingreifen und somit beispielsweise eine abdichtende Funktion des Trägerelementes für die medienführenden Leitungssysteme bereit gestellt wird.

Das Trägerelement weist bei einer Ausführungsform der Erfindung Verbindungselemente auf, welche aus einer Gruppe ausgewählt sind, welche Bajonett-, Klammer-, Schraubverbindungen, Kombinationen hieraus und dergleichen aufweist. Erfindungsgemäß erlaubt der Griffbereich, dem Bediener sowohl die Montage, als auch die Demontage des entsprechenden Gerätes. Dies kann beispielsweise ein im Wesentlichen parallel zu der Rotationsachse angeordneter Griffbereich sein, über welchen ein Bajonett- bzw. Schraubverschluss bedient und nach Öffnung des Verschlusselementes das Strömungserfassungsgerät aus der Montageöffnung entnommen werden kann. Dabei ist es besonders von Vorteil, dass gemäß einerAusführungsform das Strömungserfassungsgerät einstückig ausgebildet ist und damit eine verliersichere Gesamtanordnung insbesondere für den teilweise robusten Einsatz bei der Montage auf Baustellen bietet.

Bevorzugt. Bevorzugt bilden der Propeller und ein Magnet zur Signalübertragung eine rotationsfähige Gruppe im Bezug auf das Verschluss- bzw. Trägerelement, wobei die Rotationsgeschwindigkeit bzw. die Drehzahl des Propellers und des damit gekoppelten Magneten mittels einem entsprechenden Sensor abgenommen bzw. erfasst werden kann. Solche Techniken sind im Stand der Technik bekannt und es wird nur der Vollständigkeit halber auf die Funktionalität für die Daten-übertragen gewiesen.

Gemäß einer weiteren, besonders bevorzugten Ausführungsform erfolgt die Montage des Strömungserfassungsgerätes innerhalb der Montageöffnung, vorzugsweise im Wesentlichen parallel zu der Rotationsachsedes Funktionselementes.

Gemäß einer weiteren Ausführungsform dient der Propeller insbesondere zur Bestimmung einer Strömungsgeschwindigkeit, eines Strömungsvolumens oder der Viskosität des entsprechenden Mediums.

Gemäß einer weiteren Ausführungsform wird das Strömungserfassungsgerät werkzeugfrei in die Montageöffnung des medienführenden Systems eingebaut.

Bevorzugt sind wenigstens einzelne Bauteile des Strömungserfassungsgerätes oder aber auch alle Bauteile, insbesondere die Funktionsgruppen aus wenigsten einem Werkstoff hergestellt, welcher aus einer Gruppe ausgewählt ist, die Kunststoffe wie beispielsweise duro-und/oder thermoplastischer Kunststoffe, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, Ionomere, Fluorkunststoffe, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, PhenolHarz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen und Metalle, insbesondere Stähle, wie nicht rostende Stähle aufweist, und/oder das Verschlusselement ist aus Kunststoff und/oder die Achsen sind aus Stahl bzw. Kunststoff und/oder der aus Kunststoff hergestellte Propeller ist mit einem Magneten ausgeführt.

Bevorzugt sind wenigstens einzelne Bauteile, vorzugweise das gesamte Strömungserfassungsgerät im Spritzgussverfahren, vorzugsweise im mehrstufigen Spritzgussverfahren wie beispielsweise dem Zweikomponentenspritzgussverfahren und insbesondere im Mehrkomponentenspritzgussverfahren hergestellt.

Die vorliegende Erfindung umfasst fernerauch die Verwendung eines dervorgenannten Strömungserfassungsgeräte für ein geschlossenes oder offenes Leitungssystem.

Als Sicherungselement wird gemäß der vorliegenden Erfindung vorzugsweise ein Lager oder eine Hülse verstanden, welche ein Rastelement umfasst, in welches ein entsprechend ausgeführtes Ende der Rotationsachse eingreift und einrastet. Dies hat insbesondere den Vorteil, dass es für den Bedienerdeutlich wird, wann das entsprechende Strömungserfassungsgerät die richtige Position im Bezug auf die Einbauöffnung einnimmt.

Bevorzugt werden die entsprechend ausgeführten Strömungserfassungsgeräte als sogenannte druckneutrale Geräte innerhalb eines Leitungssystems angeordnet und weisen als weiteres, nichtintegriertes Bauteil, den Deckel oder ein Verschlusselement auf, mit welchen das entsprechende Leitungssystem abgedichtet wird.

Dabei bietet die vorliegende Erfindung die Möglichkeit serviceorientiert Funktionselemente auszutauschen. Im speziellen bezieht sich die Montage- und Servicefreundlichkeit auf ein Strömungserfassungsgerät, welches im dargestellten Fall als systemschließende bzw. systemoffene Funktionsbaugruppe eingesetzt wird.

Das systemschließende Strömungserfassungsgerät wird vorzugsweise in einem medienführenden Leitungssystem so integriert, dass es die dafür vorgesehene Montageöffnung im Wesentlichen vollständig abdichtet und man insbesondere das Strömungserfassungsgerät servicefreundlich warten und reinigen kann. Das bedeutet insbesondere, dass die Funktionsbaugruppe vorzugsweise frontal im Gesamtgerät angebracht und ohne Werkzeugaufwand demontiert werden kann und beispielsweise als Verbindungselemente Bajonett-, Klammer- oder Schraubverbindungen zum Einsatz kommen.

Besonders bevorzugte Merkmale der Erfindung sind beispielsweise, dass das systemschließende Strömungserfassungsgerät die vorhandenen Gehäusestrukturen als Träger oder Funktionsbereiche wenigstens teilweise nutzt.

Das systemschließende Strömungserfassungsgerät ist vorzugsweise servicefreundlich montier- und demontierbar und funktions- und bewegungsentkoppelt und im Gesamtsystem eingebettet.

Unter anderem bieten die im folgenden beschriebene Erfindung die Möglichkeit, in medienführende Anlagen und/oder Systemen Strömungserfassungsgeräte anwendungsspezifisch so zu platzieren, dass für den Servicefall kompakte verlier - und funktionssichere Einheiten entstehen und diese insbesondere frontal im Gesamtsystem angeordnet bzw. in diesem Bereich ausgetauscht werden können. Die Funktionsbaugruppe bildet ferner vorzugsweise ein wartungsfreundliches und werkzeugfrei lösbares Strömungserfassungssystem, welches insbesondere flexibel ausgetauscht werden kann. Bevorzugte Anwendung finden diese Systeme z. B. in Durchlauferhitzern, Wärmetauschern, Gasthermen oder dergleichen.

Das Strömungserfassungsgerät als systemschließendes Element ist eine abgeschlossene Funktionsbaugruppe, die in ihren Einzelteilen in verschiedenen Werkstoffkombinationen aufgebaut sein kann. Mögliche Kombinationen sind z. B. Kunststoffverschlusselement, eine Stahlachse, Kunststoffpropeller mit Magnet oder die Kombination mit einer Kunststoffachse.

Die Erfindung wird nachfolgend anhand zweier Ausführungsbeispiele beschrieben, welche jedoch den Schutzbereich dervorliegenden Erfindung nicht beschränken sondern nur beispielhaft erörtern.

Dabei zeigen
Fig. 1 und 2 perspektivische Ansichten einer ersten Ausführungsform der vorliegenden Erfindung;
Fig. 3 und 4 zwei unterschiedliche Ausführungsformen eines Propellers für das Strömungserfassungsgerät gemäß Figur 1 und 2;
Fig. 5 bis 7 perspektivische Ansichten eines alternativen Strömungserfassungsgerätes, welches nicht Bestandteil der vorliegenden Erfindung ist in unterschiedlichen Phasen des Zusammenbaus;
Fig. 8 eine geschnittene Seitenansicht des Strömungserfassungsgerätes gemäß Figur 7;
Fig. 9 eine Anordnung einer Ausführungsform gemäß Figur 1 in einem medienführenden Leitungssystem;
Fig. 10 eine Schnittdarstellung des Strömungserfassungsgeräts aus Figur 9 entlang der Schnittlinie A-A.

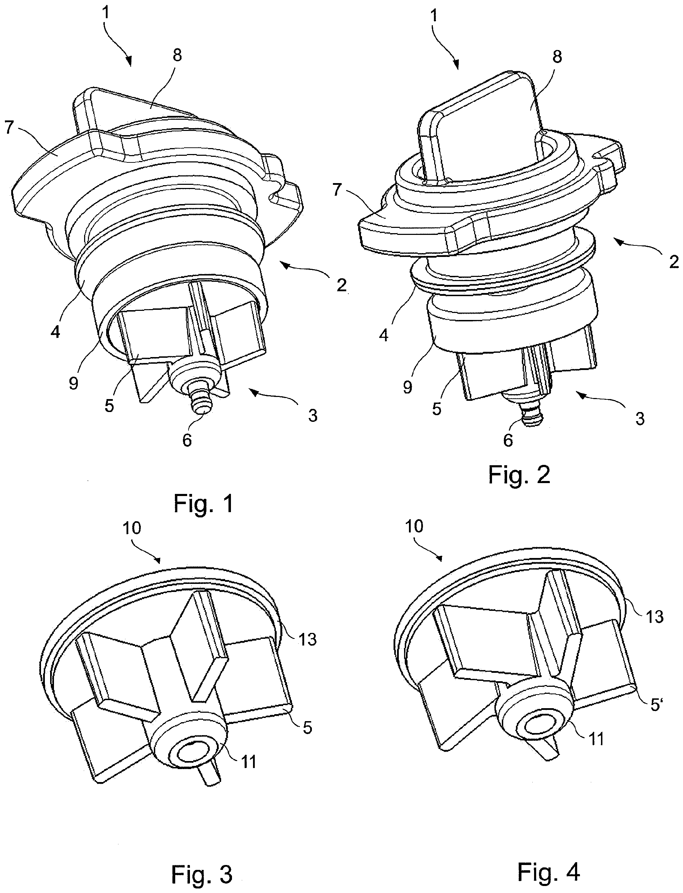

Figur 1 und Figur 2 zeigen zwei perspektivische Ansichten eines ersten Ausführungsbeispiels des erfindungsgemäßen Strömungserfassungsgerätes 1 als sogenanntes systemschließendes Element, bei welchem auf der Oberseite des Trägerelements 2 das Griffstück 8, das Verschlusselement 7 und die Dichtung 4 als Bestandteile des Trägerelementes 2 zu erkennen sind. Die Funktionsbaugruppe 3 umfasst unter anderem die Rotationsachse 6, die Propellerbaugruppe 5 und eine Führungshülse 9. Dabei ist das Verschlusselement als integrierter Verschiussdeckel ausgeführt, in welchem das Funktionselement in Form der Propellerbaugruppe mit dem Magneten angeordnet ist. Die Rotationsachse weist am unteren Ende eine umlaufende Nut auf, die insbesondere als Rastelement in Zusammenwirkung mit dem nicht dargestellten Sicherungselement dient.

In den Figuren 3 und 4 sind zwei unterschiedliche Ausführungsformen der Propellerbaugruppe dargestellt, wobei in Figur3 die Propellerblätter im Wesentlichen senkrecht zur Rotationsachse angeordnet sind und in Figur 4 mit einem vorgegebenen Winkel gekippt zur Rotationsachse angeordnet sind. Mit den Bezugszeichen 13 ist die Magnetplatte dargestellt, die u. a. auch zur Stabilisierung der Propellerblätter 12 dient. In den Figuren 3 und 4 ist die Rotationsachse selbst nicht dargestellt, sondern lediglich die Hülse 11, die zur Aufnahme der Rotationsachse dient. An dieser Hülse 11 sind die Rotationsblätter 12 angeordnet, wobei vorzugsweise die entsprechende Propellerbaugruppe als einstückiges Spritzgussteil ausgeführt ist.

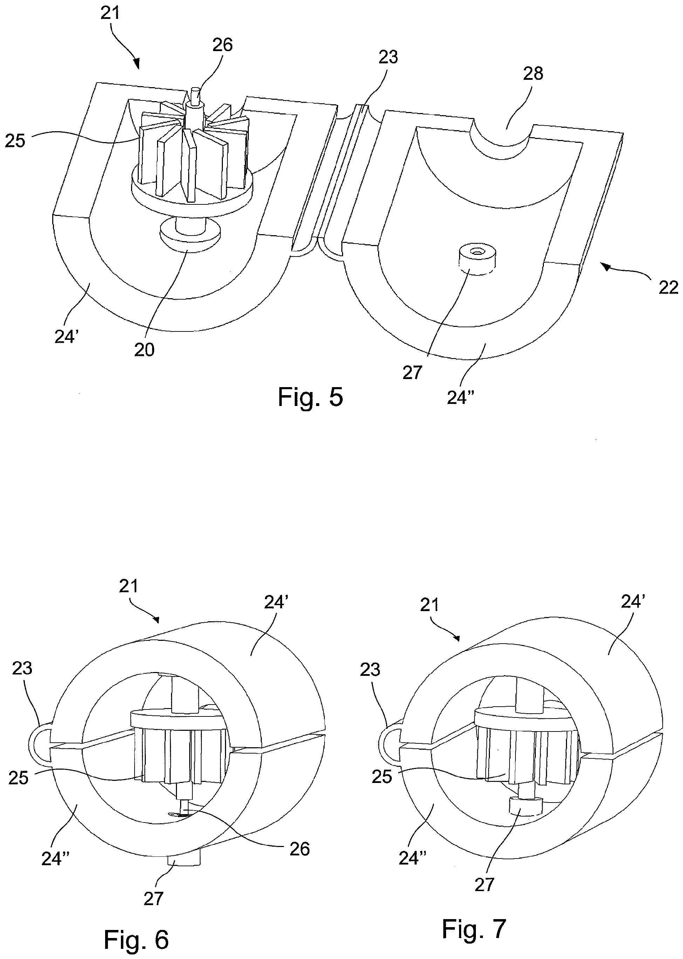

In den Figuren 5 bis 8 ist eine Ausführungsform eines alternativen, nicht erfindungsgemäßen Strömungserfassungsgerätes dargestellt, bei welchem das Strömungserfassungsgerät als offenes Element verstanden wird, wobei dieses die beiden Halbschalen 24' und 24" des Trägerelementes umfasst, die über eine Scharnierverbindung 23 schwenkbeweglich zueinander verbunden sind. Innerhalb des durch die beiden Halbschalen gebildeten Innenraums wird die Propellerbaugruppe 25 mit der Rotationsachse 26 aufgenommen und ist im geschlossenen Zustand im Lager 27 bzw. im Sicherungselement abgestützt. Mit dem Bezugszeichen 28 ist eine Durchströmöffnung für den geschlossenen Zustand des Strömungserfassungsgerätes 21 abgebildet. Figur 6 zeigt das Strömungserfassungsgerät 21 gemäß Figur 5 im geschlossenen Zustand, wobei das Sicherungselement 27 noch nicht in die Rotationsachse 26 eingreift. Erst in Figur7 ist das Sicherungselement eingeschoben und nimmt den Endabschnitt der Rotationsachse 26 auf, wodurch insbesondere die beiden Halbschalen des Trägerelementes 24', 24" zueinanderfixiert werden.

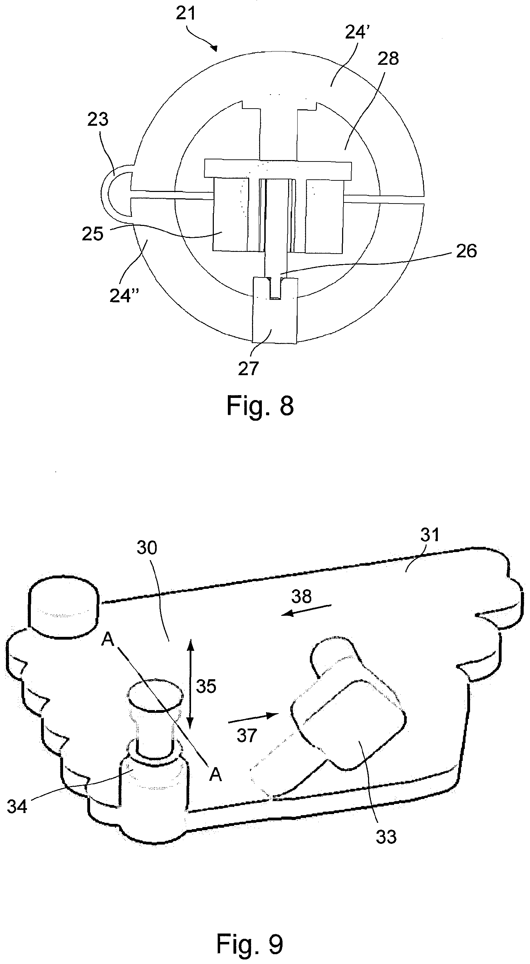

Figur 8 ist eine geschnittene Seitenansicht des Ausführungsbeispiels gemäß Figur 5 bis 7 fürein Strömungserfassungsgerät 21 als systemschließendes Element, bei welchem neben der Propellerbaugruppe 25 Teile des medienführenden Leitungssystems 28, welches sich durch das Strömungserfassungsgerät hindurch erstreckt, zu erkennen sind. Fernersind das Sicherungselement 27 und die Rotationsachse 26 dargestellt und die beiden Halbschalen 24' und 24", als auch der Scharnierbereich 23 zu erkennen.

Figur 9 zeigt das Funktionsprinzip im montierten Zustand für ein weiteres alternatives Ausführungsbeispiel eines medienführenden Leitungssystems, bei welchem das medienführende Leitungssystem 30 ein Strömungserfassungsgerät als systemschließendes Element 34 aufweist, das von dem Medium durchströmt wird. Die Montagerichtung bzw. Demontagerichtung ergibt sich aus dem Doppelpfeil 35, wobei sich die Strömungsrichtung des Mediums durch die Pfeile 37 und 38 ergibt. Mit dem Bauteil 33 ist ein weiteres Funktionselement zur Bestimmung weiterer Kenngrößen des medienführenden Leitungssystems dargestellt.

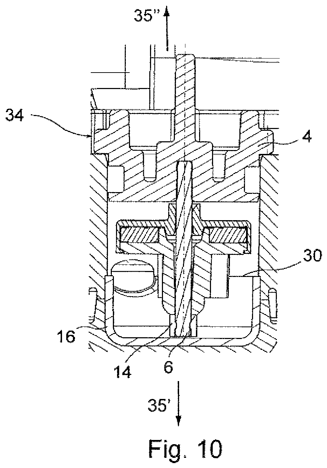

Figur 10 ist eine Schnittdarstellung durch das Strömungserfassungsgerät gemäß Figur 9 entlang der Schnittlinie A-A, welcher die Anordnung des Strömungserfassungsgerätes in der Montageöffnung und dessen abdichtende Funktion bzw. Wirkung mit dem Sicherungselement zu entnehmen ist. Dabei weist das Strömungserfassungsgerät den Griffbereich 6 und den Verschlussbereich 4 auf, der das medienführende Leitungssystem 30 abdichtet. Das Sicherungselement 14 nimmt die Rotationsachse 6 auf, die beweglich in der Montageöffnung angeordnet ist. Mit dem Bezugszeichen 34 ist das Strömungserfassungsgerät als systemschließende Elemente bzw. Baugruppe bezeichnet, die entsprechend den Pfeilen 35' und 35" innerhalb der Montageöffnung montiert bzw. demontiert wird.

## Patentansprüche

1. Strömungserfassungsgerät (1) zur Bestimmung der Durchflussmenge oder Durchflussgeschwindigkeit eines Mediums durch ein medienführendes Leitungssystem mit:
einem Trägerelement (2) mit einer Achse (6), wobei das Trägerelement (2) und die Achse (6) einteilig ausgeführt sind,
einem Propeller (5), wobei der Propeller (5) auf der Achse (6) drehbar angeordnet ist,
**dadurch gekennzeichnet, dass**
die Achse (6) an ihrem unteren Ende eine umlaufende Nut aufweist,
ein Sicherungselement (14) vorhanden ist, welches ein Rastelement umfasst, dass in die Nut eingreift und einrastet,
das Trägerelement (2) als lösbares Verschlusselement (7) ausgestaltet ist und ein Griffstück (8) aufweist,
wobei das Verschlusselement (7) als Verschlussdeckel ausgeführt ist und eine integrierte und/oder angespritzte Dichtung aufweist,
wobei das Trägerelement (2) wenigstens ein Verbindungselement zum werkzeugfreien Ein- und Ausbau in eine Montageöffnung des medienführenden Leitungssystems aufweist.

2. Strömungserfassungsgerät gemäß Anspruch 1, **dadurch gekennzeichnet, dass**
der Propeller (5) einen Magneten (13) zur Erfassung einer Drehzahl des Propellers durch einen Sensor aufweist.

3. Strömungserfassungsgerät gemäß einem der vorstehenden Ansprüche, **dadurch gekennzeichnet, dass**
die Verbindungselemente aus einer Gruppe ausgewählt sind, welche Bajonett-, Klammer-, Schraubverbindungen und Kombinationen hieraus aufweist.

4. Strömungserfassungsgerät gemäß einem der vorstehenden Ansprüche, **dadurch gekennzeichnet, dass**
die Montage des Strömungserfassungsgerätes (1) in das medienführende Leitungssystem im Wesentlichen parallel zur Achse (6) erfolgt.

5. Strömungserfassungsgerät gemäß einem der vorstehenden Ansprüche, **dadurch gekennzeichnet, dass**
das Trägerelement (2), der Propeller (5) und/oder das Sicherungselement (14) aus einem Werkstoff hergestellt sind, welcher aus einer Gruppe ausgewählt ist, die duroplastische und thermoplastische Kunststoffe enthält.

## Claims

1. A flow detection device (1) for determining the amount of flow or the rate of flow of a medium through a medium-carrying line system, the flow detection device comprising:
a carrier element (2) having an axis (6), the carrier element (2) and the axis (6) being designed to be integral,
a propeller (5), the propeller (5) being rotatably arranged on the axis (6),
**characterized in that**
the axis (6) includes a circumferential groove at its lower end,
there is provided a securing element (14) comprising a snap-in element that engages with and snaps into the groove,
the carrier element (2) is designed as a detachable closing element (7) and includes a grip piece (8),
the closing element (7) being designed as a closing cover and having a seal that is integral therewith and/or injection-molded thereon,
the carrier element (2) including at least one connector for tool-free installation in and removal from a mounting hole of the medium-carrying line system.

2. The flow detection device according to claim 1, **characterized in that**
the propeller (5) includes a magnet (13) for detecting a speed of the propeller by means of a sensor.

3. The flow detection device of any preceding claim, **characterized in that**
the connectors are selected from a group comprising bayonet connections, clamping connections, screwed connections and combinations thereof.

4. The flow detection device of any preceding claim, **characterized in that** the flow detection device (1) is mounted into the medium-carrying line system substantially in parallel with the axis (6).

5. The flow detection device of any preceding claim, **characterized in that**
the carrier element (2), the propeller (5) and/or the securing element (14) are made of a material selected from a group comprising thermosetting plastics and thermoplastics.

## Revendications

1. Appareil de saisie de l'écoulement (1) en vue de la détermination du coefficient d'écoulement ou de la vitesse d'écoulement d'un milieu à travers un système de conduites acheminant le milieu avec :
un élément porteur (2) avec un axe (6), l'élément porteur (2) et l'axe (6) étant réalisés en une partie,
une hélice (5), l'hélice (5) étant disposée sur l'axe (6) de manière rotative,
**caractérisé en ce que**
l'axe (6) présente une goujure périphérique sur son extrémité inférieure,
un élément d'arrêt (14) est disponible, qui présente un élément à crans, qui prend et s'enclenche dans la goujure,
l'élément porteur (2) est aménagé comme élément de fermeture (7) et présente une poignée (8),
l'élément de fermeture (7) étant réalisé comme couvercle de fermeture et présentant un joint intégré et/ou moulé par injection,
l'élément porteur (2) présentant au moins un élément de liaison en vue du montage et du démontage sans outils dans un orifice de montage du système de conduites acheminant le milieu.

2. Appareil de saisie de l'écoulement selon la revendication 1, **caractérisé en ce que** l'hélice (5) présente un aimant (13) en vue de la saisie d'un régime de l'hélice par un capteur.

3. Appareil de saisie de l'écoulement selon une quelconque des revendications précédentes, **caractérisé en ce que** les éléments de liaison sont sélectionnés à partir d'un groupe, qui présente des liaisons à baïonnette, à clips, à vis et des combinaisons de celles-ci.

4. Appareil de saisie de l'écoulement selon une quelconque des revendications précédentes, **caractérisé en ce que**
le montage de l'appareil de saisie de l'écoulement (1) est réalisé pour l'essentiel parallèlement à l'axe (6) dans le système de conduites acheminant le milieu.

5. Appareil de saisie de l'écoulement selon une quelconque des revendications précédentes, **caractérisé en ce que**
l'élément porteur (2), l'hélice (5) et/ou l'élément d'arrêt (14) sont fabriqués en un matériau qui est sélectionné à partir d'un groupe qui contient des matières synthétiques duroplastiques et thermoplastiques.
